# EUROPEAN PATENT APPLICATION

(11) **EP 4 848 100 A1**
(43) Date of publication of application: **02.12.2026**
(21) Application number: 25869650.9
(22) Date of filing: 30.04.2025
(51) Int. Cl.: G06F 16/29, G06F 16/248

(54) **METHOD AND SYSTEM FOR AGGREGATED DISPLAY OF MAP DATA, AND ELECTRONIC DEVICE**

(30) Priority: 18.04.2025 CN 202510499607
(71) Applicant: Ugreen Group Limited, Shenzhen, Guangdong 518000 (CN)
(72) Inventor: LV, Xuming, Shenzhen Guangdong 518000 (CN); YI, Qibang, Shenzhen Guangdong 518000 (CN); LI, Yunxin, Shenzhen Guangdong 518000 (CN)
(74) Representative: Mirlach, Xiaolu
(86) International application number: PCT/CN2025/092566
(87) International publication number: WO 2026/218372

(57) **Abstract**

This application relates to the technical field of map data processing, and in particular to an aggregated display method and system for map data, and an electronic device. The method is used in an electronic device, the electronic device is communicatively connected to a network-attached storage device, the electronic device accesses target data in the network-attached storage device via a target application, and the target data includes a target photo and corresponding geographic information. The method includes: acquiring a zoom level request including a current zoom level, and acquiring an area point density corresponding to the target data based on the geographic information; acquiring a zoom adjustment factor through an exponential calculation based on the current zoom level, a maximum zoom level, and a minimum zoom level, acquiring a density adjustment factor through a logarithmic calculation based on the area point density, and multiplying a preset base radius by the zoom adjustment factor and the density adjustment factor to acquire a target aggregation radius; and displaying the target photo based on the target aggregation radius. This application enables a more fine-grained and realistic aggregation effect.

## Description

### FIELD OF TECHNOLOGY

This application relates to the technical field of map data processing, and in particular to an aggregated display method and system for map data, and an electronic device.

### BACKGROUND

Map data usually contains a large amount of geographic location information. If all data points are displayed directly on a map, it may result in information overload and visual clutter. Through data aggregation, a large number of data points can be merged into fewer cluster points, thereby reducing data volume and improving visualization efficiency.

A fixed grid aggregation algorithm is a common data aggregation method, which divides a map display area into grid cells of a fixed size. All marked points within each grid are forcibly merged into a single cluster point. Due to the use of preset grid division, a high-density area may experience over-aggregation, while a low-density area may suffer from under-aggregation, which may fail to accurately reflect actual data distribution.

When multiple photos have exactly the same geographic location, only a simple numeric label can be overlaid and displayed at corresponding coordinates to indicate a quantity of photos, and aggregation is not possible.

### SUMMARY

Embodiments of this application provide an aggregated display method and system for map data, an electronic device, and a storage medium, to resolve a problem of an inability to accurately reflect actual data distribution and an inability to aggregate photos in the prior art.

This application discloses an aggregated display method for map data, applied to an electronic device on which a target application is installed, where the electronic device is communicatively connected to a network-attached storage device, the electronic device is capable of accessing target data in the network-attached storage device via the target application, and the target data includes a target photo and geographic information corresponding to the target photo, where the method includes:
acquiring a zoom level request for the target data, where the zoom level request includes a current zoom level, and acquiring an area point density corresponding to the target data based on the geographic information;
acquiring a zoom adjustment factor through an exponential calculation based on the current zoom level, a maximum zoom level, and a minimum zoom level, acquiring a density adjustment factor through a logarithmic calculation based on the area point density, and multiplying a preset base radius by the zoom adjustment factor and the density adjustment factor to acquire a target aggregation radius; and
displaying the target photo based on the target aggregation radius.

This application also discloses an electronic device, including a memory and a processor, where the memory stores a computer program, and the computer program, when executed by the processor, causes the processor to perform the steps of the above method.

This application also discloses an aggregated display system for map data, including: a network-attached storage device and the electronic device described above, where an application capable of performing the steps of the above method is installed on the electronic device.

Implementing the embodiments of this application yields the following beneficial effects:
an area point density is acquired based on the target map data and the zoom level request; the target aggregation radius is acquired based on the zoom level and the area point density, where the target aggregation radius has an exponential relationship with the zoom level and a logarithmic relationship with the area point density, thereby enabling a more fine-grained and realistic aggregation effect. At different zoom levels, an aggregation radius is dynamically adjusted, enabling the user to more clearly observe distribution of map data at various levels, thereby enhancing user experience.

### BRIEF DESCRIPTION OF THE DRAWINGS

To describe the solutions in embodiments of this application or in the conventional technology more clearly, the following briefly describes the accompanying drawings for describing embodiments or the conventional technology. It is clear that the accompanying drawings in the following descriptions show merely some embodiments of this application, and a person of ordinary skill in the art may still derive other drawings from these accompanying drawings without creative efforts.

Where:
FIG. 1 is a schematic flowchart of one embodiment of an aggregated display method for map data according to this application;
FIG. 2 is a schematic diagram of an application scenario of the aggregated display method for map data according to this application;
FIG. 3 is a schematic diagram of an aggregation effect of the map data according to one embodiment of this application;
FIG. 4 is a schematic diagram of an aggregation effect of the map data according to another embodiment of this application;
FIG. 5 is a schematic diagram of an internal structure of an electronic device according to one embodiment of this application; and
FIG. 6 is a schematic structural diagram of one embodiment of an aggregated display system for map data according to this application.

### DESCRIPTION OF THE EMBODIMENTS

The following clearly and completely describes technical solutions in embodiments of this application with reference to accompanying drawings in the embodiments of this application. Apparently, the described embodiments are only some rather than all of the embodiments of this application. All other embodiments acquired by a person of ordinary skill in the art based on embodiments of this application without creative efforts shall fall within the protection scope of this application.

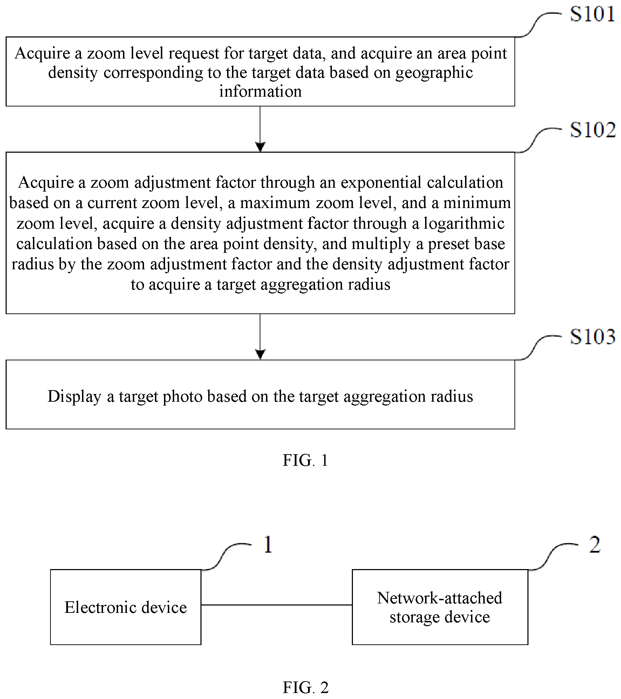

Refer to FIG. 1 and FIG. 2. FIG. 1 is a schematic flowchart of one embodiment of an aggregated display method for map data according to the present invention. FIG. 2 is a schematic diagram of an application scenario of the aggregated display method for map data according to the present invention. An electronic device 1 is communicatively connected to a network-attached storage device 2. A target application is installed in the electronic device 1, and target data is stored in the network-attached storage device 2. The electronic device 1 can access the target data in the network-attached storage device 2 via the target application, thereby performing aggregated display on the target data. The target data may include a target photo and geographic information corresponding to the target photo, or may be other data related to geo-location.

The aggregated display method for map data provided in the present invention specifically includes the following steps.

S101: Acquire a zoom level request for target data, and acquire an area point density of target map data based on the target data.

In a specific implementation scenario, the target data and map data corresponding to the target data are acquired, the map data includes a map coordinate system and basic map information, the target data includes target data content and corresponding geographic information. The target data content means data content that needs to be aggregated and displayed, such as population data, traffic data, and the like, and is a target image in this embodiment. Coordinate transformation and spatial index construction are performed on the target data. The target data content is subjected to coordinate transformation based on the map coordinate system and imported into an R language. A corresponding library or extension package (such as spatialindex) in the R language is used to construct an R-tree spatial index. R-tree is a multidimensional index structure suitable for a fast query of spatial data. By using the constructed R-tree spatial index, the spatial query can be accelerated, such as a range query, a nearest neighbor query, or the like. The R-tree data structure can effectively reduce data volume to be searched and improve query efficiency.

A user's zoom operation on the target data is tracked to acquire the zoom level request, and the zoom level request includes a specific zoom level. Based on the accessed target data, distribution of corresponding data points is counted, and the area point density is acquired based on the distribution of data points.

S102: Acquire a zoom adjustment factor through an exponential calculation based on a current zoom level, a maximum zoom level, and a minimum zoom level, acquire a density adjustment factor through a logarithmic calculation based on the area point density, and multiply a preset base radius by the zoom adjustment factor and the density adjustment factor to acquire a target aggregation radius.

In a specific implementation scenario, a change in data during actual aggregation may not be linear. Therefore, a nonlinear variation strategy is adopted based on the preset base radius in combination with the current zoom level and the area point density, to acquire a target aggregation radius. The nonlinear variation strategy can better capture complex relationships and features among data. Moreover, the nonlinear variation strategy can be flexibly adjusted based on different input conditions, enabling the system to better adapt to changes in different conditions, thereby improving adaptability and flexibility of the system. For example, the nonlinear variation strategy may be a nonlinear function with the zoom level and the area point density as parameters. The nonlinear function may include an exponential function, a logarithmic function, and the like. In addition, it is also necessary to ensure that the calculated target aggregation radius is within a proper range with a boundary condition considered, such as being limited by a minimum aggregation radius and a maximum aggregation radius.

In one embodiment, the zoom adjustment factor is acquired based on the current zoom level, the maximum zoom level, and the minimum zoom level, and the density adjustment factor is acquired based on the area point density. The preset base radius is multiplied by the zoom adjustment factor and the density adjustment factor to acquire the target aggregation radius. Therefore, a size of the target aggregation radius is positively influenced by the zoom adjustment factor and the density adjustment factor.

Specifically, the zoom adjustment factor is acquired through the exponential calculation based on the current zoom level, the maximum zoom level, and the minimum zoom level. At a low zoom level (zoomed out), the zoom adjustment factor increases slowly, maintaining strong aggregation and preventing an excessive scatter density. At a high zoom level (zoomed in), the zoom adjustment factor expands rapidly, thereby quickly de-aggregating to show details.

The density adjustment factor is acquired through the logarithmic calculation based on the area point density. When the area point density is high, the density adjustment factor increases significantly, which can prevent excessive overlap. When the area point density is extremely high, the growth of the density adjustment factor is suppressed by the logarithmic function, preventing the target aggregation radius from becoming uncontrollably large.

In one embodiment, the target aggregation radius is acquired according to the following formula: $R = {R}_{base} \times {\left(1+\frac{{zoom}_{current} - {zoom}_{min}}{{zoom}_{max} - {zoom}_{min}}\right)}^{2} \times {log}_{10} \left(density\right)$
where R is the target aggregation radius, *R_{base}* is the base radius, *zoom_{current}* is the current zoom level, *zoomₘᵢₙ* is the minimum zoom level, *zoomₘₐₓ* is the maximum zoom level, and *density* is the area point density.

*R_{base}* is a reference value, which determines an initial scale of aggregation, which may be a radius at the maximum zoom level or a radius at the minimum zoom level. In this embodiment, *R_{base}* is a default aggregation radius, with a size of 10 km. A value of *R_{base}* can be adjusted according to${\left(1+\frac{{zoom}_{current} - {zoom}_{min}}{{zoom}_{max} - {zoom}_{min}}\right)}^{2}$ is the zoom adjustment factor. When the current zoom level approaches the minimum zoom level, this zoom adjustment factor approaches 1 (1+0=1). As the zoom level increases, this zoom adjustment factor increases. A square operation in this zoom adjustment factor makes a change in the target aggregation radius more significant as a zoom level changes. Specifically, when the zoom level increases, the target aggregation radius increases rapidly, quickly reducing an aggregation strength to display more details. When the zoom level decreases, the target aggregation radius decreases slowly, maintaining a high degree of aggregation to prevent scatter explosion.

log₁₀(*density*) is the density adjustment factor. Because linear processing of a high-density area leads to an excessively large radius, and a logarithm can compress an extreme value, logarithmic calculation is used for the density adjustment factor. As the area point density is greater, a logarithmic value is greater, thereby increasing the target aggregation radius. In this way, a target aggregation radius of each marked point can be adjusted based on densities of different areas, so that a marked point in an area with a greater area point density has a larger target aggregation radius. This maintains a good visualization effect, ensures that an aggregated shape of the marked point is clear and distinct, and prevents information loss or visual clutter caused by excessive aggregation.

In summary, a square relationship in the formula causes a radius at a detail level (high zoom) to change more dramatically, matching a user's expectation for rapid de-aggregation during zooming-in. The logarithmic function prevents radiuses in few hotspot areas from growing uncontrollably. This can prevent the radius from being extremely small and causing scatter clutter at a lower zoom level, and prevent the radius from being extremely large and losing a local feature at a higher zoom level.

In other implementation scenarios, the amount of target data to be aggregated is first acquired. For example, the target data can be filtered based on the target map data to acquire target data meeting aggregation requirements, and the amount of the target data is counted as an amount to be aggregated. For example, if the target map data is map data of Jiangsu Province, the target data can be filtered, and geographic information, namely, target data within Jiangsu Province, can be used as target data to be aggregated.

It is determined whether the amount of the target data to be aggregated exceeds a preset threshold. If the amount of the target data to be aggregated exceeds the preset threshold, step S102 is performed to acquire the target aggregation radius based on the zoom level and the area point density. If the amount of the target data to be aggregated does not exceed the preset threshold, the base radius is directly used as the target aggregation radius. A size of the base radius can be set according to user's actual needs, for example, 10 km. The preset threshold can be set according to user's actual needs, for example, 1,000.

The preset threshold can be used to control algorithm performance. Data volume processed by an algorithm can be limited by setting the preset threshold, thereby controlling calculation complexity and runtime of the algorithm. The preset threshold can be set according to a computing capability of the electronic device to prevent system crashes caused by the electronic device being overloaded due to an excessively large preset threshold.

S103: Display the target map data based on the target aggregation radius.

In a specific implementation scenario, a clustering algorithm (such as DBSCAN (Density-Based Spatial Clustering of Applications with Noise), K-means) is used to divide the target map data into multiple cluster data groups based on the target aggregation radius, a quantity of data points and a centroid included in each cluster data group are calculated, and marked points corresponding to each cluster data group are displayed on a map based on the centroid and a quantity of data points.

Further, a centroid position of a marked point is optimized to more reasonably reflect an original distribution characteristic of the data point. First, initial clustering is performed on the target data using a clustering algorithm such as the DBSCAN. The DBSCAN algorithm performs clustering based on two parameters: ε (epsilon, neighborhood radius) and MinPts (minimum quantity of data points). The target aggregation radius is used as a value of ε, and MinPts can be set based on a data density, for example, a single point is allowed to form a cluster.

For each initial cluster point, a weight factor of each data point is acquired based on the initial cluster point, and an iterative calculation is performed to adjust a centroid position of the initial cluster point by the weight factor. Iterative optimization is used to distinguish between primary and secondary points and excludes noise interference, so that the centroid position satisfies both mathematical optimality and visual rationality. In fields requiring high-precision spatial representation (such as smart cities, emergency dispatch, and business analysis), this method performs well, ensuring a machine-generated aggregation result is highly consistent with a human spatial cognition expectation.

In one implementation scenario, a magnitude of the weight factor is related to a distance between the data point and a current centroid. As the distance is greater, the weight is smaller. A point that is farther away (such as an outlier) has an extremely low weight and exerts minimal influence on the centroid position, thereby causing the centroid to shift toward an area with a higher data point density. This better reveals clustering and density distribution of the data points, thereby providing more intuitive and meaningful data visualization.

Specifically, an iterative centroid of the current centroid can be acquired according to the following formula: ${x}_{c} = \frac{\sum \left({w}_{i}{x}_{i}\right)}{\sum {w}_{i}}$ ${w}_{i} = \frac{1}{{{d}_{i}}^{2} + {10}^{- 5}}$
where *x_{c}* is the iterative centroid, *xᵢ* is a current coordinate of an i-th data point, *dᵢ* is a distance between the i-th data point and the current centroid, and *wᵢ* is a weight factor of the i-th data point.

The iteration is performed for a preset number of times, or until a coordinate offset between two consecutive acquired centroids is less than a preset threshold (0.1 pixel), a last acquired centroid is used as the target centroid. In the above solution, inverse distance squared weighting and iteration with small steps are used to prevent centroid jumping, ensuring stable visual output without jitter, and preventing an unnecessary calculation.

In one embodiment, a Newton-Raphson method is used for iteration:

In a *k*-th iteration, the acquired centroid position is *x_{c}*^{(*k*)}, and an iterative update formula is: ${{x}_{c}}^{\left(k+1\right)} = {{x}_{c}}^{\left(k\right)} - α ⋅ ∇ f \left({{x}_{c}}^{\left(k\right)}\right)$
where *α* is a learning rate controlling step size (usually 0.1-0.5), which can be dynamically adjusted to balance a speed and stability, ∇*f*(*x_{c}*^{(*k*)}) is a gradient of a target function *f*(*x_{c}*) with respect to the centroid, so that the centroid is updated in a direction of a steepest descent of the function. Iteration stops when an iteration termination condition is set to $\left‖{{x}_{c}}^{\left(k+1\right)}-{{x}_{c}}^{\left(k\right)}\right‖ < 0.1 .$

The Newton-Raphson method utilizes second-order derivative information (when the Hessian matrix is introduced), which converges to an optimal solution faster than a first-order method (such as gradient descent). In addition, line search can be used to dynamically adjust *α*, to prevent oscillation.

In other implementation scenarios, data points can be classified based on attributes of the data points, and data points of different categories are assigned different weights. For example, the importance of each data point can be acquired according to displayed target requirements, and a weight is assigned to each data point based on importance. The weight can alternatively be assigned to each data point based on a category of each data point. For example, in a scenario such as population education statistics, data points corresponding to people with a bachelor's degree or above are assigned higher weights, while data points corresponding to people with lower education levels are assigned lower weights. A magnitude of the attribute weight can be user-defined or automatically assigned based on a preset fixed allocation standard.

A distribution weight of data points can be acquired based on a distance, and this step is basically consistent with the content described above and is not described herein again. The attribute weight and the distribution weight are combined to acquire a weight factor representing a comprehensive weight.

For example, the weight factor can be acquired according to the following formula: ${W}_{i} = β \times {D}_{i} + γ \times {w}_{i}$
where *Wᵢ* is the weight factor, *Dᵢ* is the attribute weight, and *wᵢ* is a distance weight, ${w}_{i} = \frac{1}{{{d}_{i}}^{2} + {10}^{- 5}}$. *β* is an attribute weight coefficient, *γ* is a distance weight coefficient, and *β* and *γ* can be customized by a user.

After the weight factor is acquired, iteration is performed based on ${x}_{c} = \frac{\sum \left({W}_{i}{x}_{i}\right)}{\sum {W}_{i}}$ until a preset stopping condition is met, and a centroid acquired in the last iteration is used as the target centroid. A specific iterative process is basically consistent with the description above and is not described herein again.

The attribute weight and the distribution weight are combined, and both attribute importance and a spatial distribution density of data points can be considered for calculation of the weight factor. In this way, when a weighted centroid is calculated, a difference between data points is more comprehensively considered, resulting in more accurate determining of the centroid position. The calculation of the weight factor enables the centroid position to better conform to overall characteristics of the data points, so that final cluster points better conform to actual data conditions and user's personalized needs.

In other implementation scenarios, when the target map data is displayed, to better meet user's browsing needs, enhance user experience, and respond to user interactions on the map in real time, target aggregation radiuses of different areas are intelligently adjusted. This ensures global visualization while prioritizing detailed display needs of user-focused areas.

It is necessary to acquire user's operation information on the target map data. The operation information may include actions such as a single click, a double click, a drag, a zoom, and the like. The operation information reflects user's specific actions as well as concerns of the user in the map data. Based on the user's operation information, a map area can be divided into an operation area and a non-operation area. The operation area may be an area where the user frequently performs operations (such as multiple clicks, multiple views, multiple zooms, and the like), while the non-operation area is an area where the user performs fewer operations. Alternatively, a user-concerned position can also be acquired using technologies such as eye-tracking, an area seen by the user is used as the operation area, and an unseen area is used as the non-operation area.

For the acquired target aggregation radius, different operations are performed in different areas. More details can be retained during reducing the aggregation radius in a user's frequently operated area, allowing the user to see data point details in the area more clearly and enhancing understanding and perception of the data by the user. Increasing the aggregation radius in an inactive area can reduce a quantity of data points that need to be rendered, thereby improving rendering efficiency. This can save calculation resources and accelerate a loading speed of the map data. The target aggregation radiuses of different areas are dynamically adjusted, so that resources can be properly allocated according to a user behavior and a concerned point, thereby improving user's interaction experience. The user feels that the map data better meets self-needs, operations are more intuitive and responses are timelier, while rendering efficiency is improved in the inactive area, implementing intelligent allocation and utilization of the resources.

In the above method, an adaptive map system centered on a user's visual focus can be constructed. The target aggregation radius is dynamically adjusted, so that an intelligent balance is implemented between "global overview" and "local detail," as well as between "rendering performance" and "information richness."

In one embodiment, when the target aggregation radius needs to be reduced, a reduction ratio can be acquired according to the following formula: ${B}_{1} = max \left(0.3,1-\left(UIF\times TDF\right)\right)$

When the target aggregation radius needs to be increased, an amplification ratio can be acquired according to the following formula: ${B}_{2} = 1 + \left(2\times \left(1-TDF\right)\times \left(1-UIF\right)\right)$
where *B*₁ is the reduction ratio, *B*₂ is the amplification ratio, *UIF* is a user operation frequency, and *TDF* is time decay after the last operation.

When the user interacts frequently (UIF→1), at least 30% of original details (lower limit of 0.3) are forcibly retained to prevent excessive aggregation that results in an operation failure. When there is no operation for a long time (TDF→0), default aggregation is automatically restored to save resources. When the operation frequency is low (UIF→0), and the system is idle for a long time (TDF→0), a maximum amplification can reach 300% (B₂=3.0). A product term can also be used to prevent sudden excessive aggregation in an edge area.

The aggregation radius is dynamically adjusted based on a user's operation frequency and the time decay, enabling the display of the map data to be more personalized and adapted to a user's operating habit. The user sees more details in a frequently operated area, while higher rendering efficiency is acquired in the inactive area. This also better balances a relationship between resource allocation and user experience, enhances map data presentation, meets personalized needs, optimizes data visualization, and enhances user interaction experience.

Further, dynamic statistical information can be overlaid on a cluster point to display a quantity of data points corresponding to each cluster point, a category proportion, and the like. The information can be dynamically updated based on actual data of the cluster point (cluster points differ at different zoom levels), providing the user with richer data presentation. The information can be displayed on cluster points in the form of text, charts, or the like.

When the user zooms in on the map or clicks on the cluster point, a hierarchical expansion animation can be used to implement a smooth transition between the cluster point and an original data point. This allows the user to intuitively observe a process of the cluster point expanding into the data point, thereby enhancing the user experience.

When the user clicks the cluster point, a detailed information pop-up can be displayed, showing detailed information about the data point contained in the cluster point. This allows the user to load detailed information as needed, balancing interface simplicity with data accessibility.

In other implementation scenarios, when a current zoom level is higher than a preset threshold (such as level 18), a previously aggregated marked point is restored to be displayed individually.This can be implemented by canceling aggregation or adjusting a display mode for the marked point. At an extremely high zoom level, the marked point is displayed individually to enable the user to view detailed information about each data point more clearly.

When large-scale data is processed, a calculation load on a front end may become excessive, resulting in page lag or crashes, thereby affecting the user experience. To address this issue, Web Workers can be used to perform clustering calculation in background threads, thereby preventing blocking a main thread and ensuring page responsiveness. The main thread can focus on rendering and user interaction, while a calculation task is performed in a background thread, thereby improving overall performance. Aggregation calculation logic is deployed on a server side, leveraging server-side calculation resources for processing. Large-scale data can be processed with a server's distributed processing capability, preventing a limitation of a front end processing capability and ensuring system stability and performance.

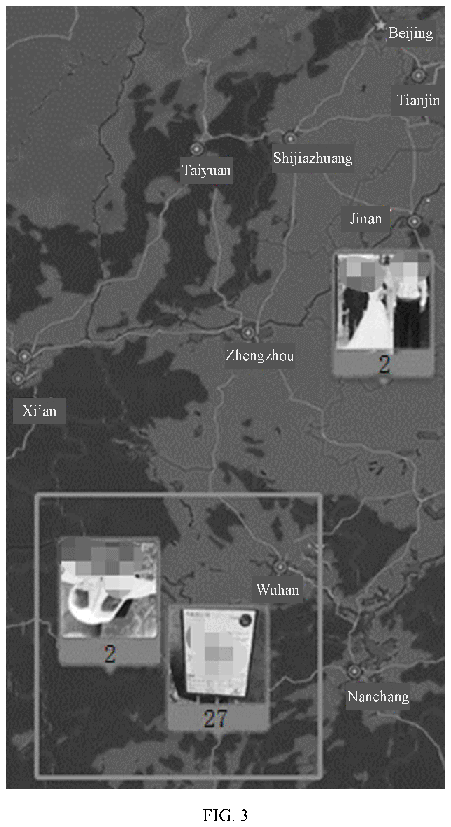

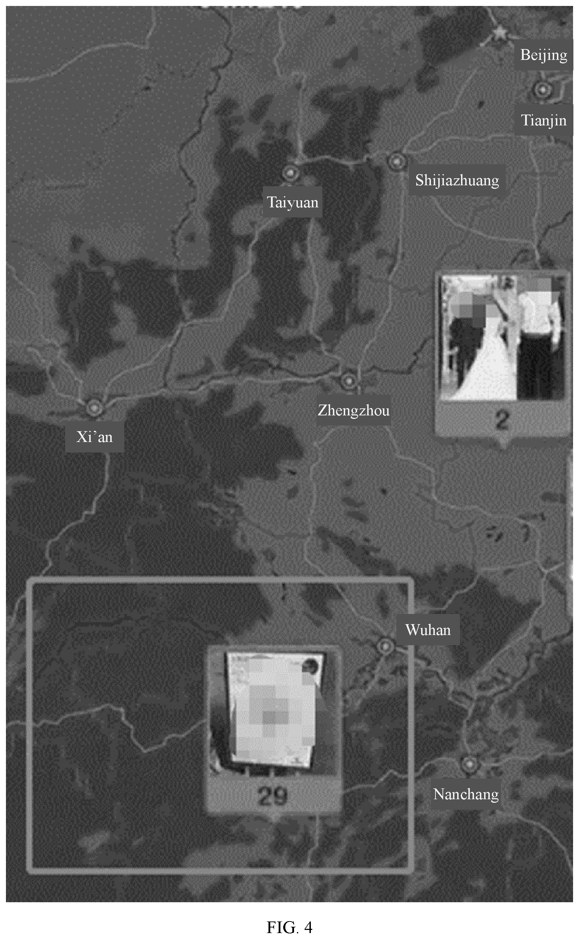

In one embodiment, refer to FIG. 3 and FIG. 4. FIG. 3 and FIG. 4 are schematic diagrams of a map data aggregation effect according to this application. FIG. 4 shows a result of increasing a zoom level (aggregation) based on FIG. 3. In scenarios shown in FIG. 3 and FIG. 4, the target data includes a target photo and geographic information corresponding to the target photo. When an image is captured, geographic information can be acquired automatically or manually as the geographic information corresponding to the target photo, or corresponding geographic information can be assigned to the image manually at a later stage. For example, the geographic information may be GPS coordinates in EXIF (Exchangeable image file format).

After the target aggregation radius is acquired based on the steps described above, corresponding data points are generated on map data based on geographic information of each target photo. These data points are aggregated based on the target aggregation radius to acquire multiple aggregation points, and each aggregation point contains all data points within the target aggregation radius and corresponds to at least one piece of image data.

A quantity of target photos associated with each aggregation point is counted to acquire a quantity of target photos corresponding to each cluster point. For each aggregation point, a target display image is acquired from selected target photos, which can be a thumbnail or an original image. One or more representative or relevant pieces of image data can be selected as the target display image. The target display image and a quantity of aggregation are displayed.

In one implementation scenario, if a quantity of target photos corresponding to one aggregation point is less than a preset quantity (such as four), two or more target photos can be selected for merged display, which can be implemented by image stitching, overlay, or other synthesis techniques. If the quantity of target photos corresponding to one aggregation point is greater than or equal to the preset quantity, a representative or relevant target photo can be selected according to requirements and an algorithm. Selection can be performed based on image quality, a timestamp, a tag, and other factors. For example, the latest photo or a photo with the highest resolution can be selected, or a photo with the greatest/minimum difference can be selected using an image similarity algorithm.

In one embodiment, the user can input a zoom level request by sliding a finger on a screen of an electronic device. For example, a target sliding direction can be preset. Sliding the finger along a target direction increases a zoom level, while sliding in an opposite direction decreases the zoom level. For another example, the user can slide on the screen using two or more fingers. When a distance between touch points corresponding to fingers on the screen increases, the zoom level increases; when the distance decreases, the zoom level decreases.

User's sliding information on the screen of the electronic device is acquired in real time. Based on the sliding information, a corresponding zoom level request is acquired, and a current target aggregation radius is determined based on the zoom level request. Data points on the map are aggregated based on a current target aggregation radius, and a corresponding aggregation result is displayed. The aggregation result can be presented with an animation effect or a gradient transition to enhance user experience.

Based on results of aggregation (increasing a zoom level) and dispersion (decreasing a zoom level), positions of aggregation points are re-rendered. An animation effect or a transition effect can be used to make the aggregation and dispersion smoother and more natural. When dispersion is required, the aggregation points can be dispersed again to display more details. For example, during dispersion, when an aggregation point is dispersed into multiple sub-points (or encounters reverse aggregation), linear interpolation is used to calculate intermediate coordinates, and positions are updated frame by frame. Displaying the aggregation effect and the dispersion effect allows the user to clearly observe changes in data point aggregation and dispersion, enabling high-frequency interaction with the user.

In one embodiment, a Web Worker thread is created to perform a clustering calculation task. A clustering algorithm code is implemented in a Web Worker script, and a main thread sends a message to the Web Worker to trigger the calculation task. In the main thread, data to be clustered is sent to a Web Worker thread. After completing the calculation, the Web Worker thread returns a result to the main thread. Upon receiving the clustering calculation result returned by the Web Worker, the main thread is responsible for rendering scheduling based on the result, for example, operations such as updating positions of data points on the map and displaying the aggregation effect. Using a Web Worker can prevent performing a time-consuming clustering calculation in the main thread, thereby improving page responsiveness. This method for separating a calculation task from a rendering task helps maintain smoothness of a page. The present invention is also capable of reducing a rendering load on the main thread by controlling a quantity of aggregation points, thereby ensuring smooth rendering with large-scale data.

A distributed processing architecture used in the present invention can distribute large-scale data across multiple servers for parallel processing, deploy complex and time-consuming aggregation calculation logic on a server side, and utilize a computing resource of the server to support real-time aggregation of millions of points. In addition, the server side can implement a preprocessing and caching mechanism to process data and store a calculation result in advance, thereby reducing response latency and improving system performance.

As described above, in this embodiment, an area point density is acquired based on the target map data and the zoom level request; the target aggregation radius is acquired based on the zoom level and the area point density, where the target aggregation radius has an exponential relationship with the zoom level and a logarithmic relationship with the area point density, which enables the aggregation effect to be more refined and conform to actual conditions. At different zoom levels, an aggregation radius is dynamically adjusted, enabling the user to more clearly observe distribution of map data at various levels, thereby enhancing user experience.

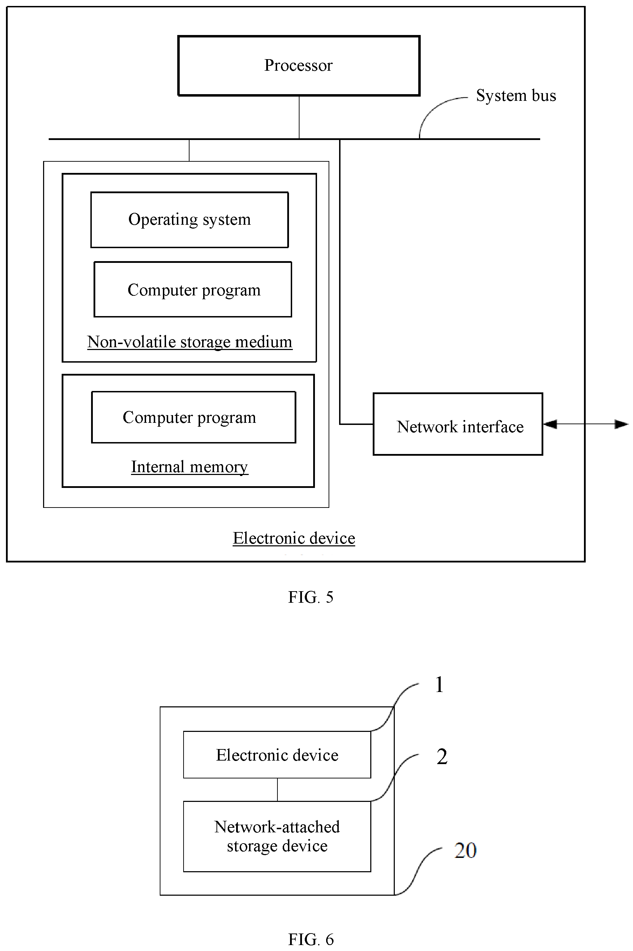

FIG. 5 illustrates a schematic diagram of an internal structure of an electronic device according to one embodiment. The electronic device may specifically be a terminal or a server. As shown in FIG. 5, the electronic device includes a processor, a memory, and a network interface, all connected via system buses. The memory includes a non-volatile storage medium and internal memory. The non-volatile storage medium of the electronic device stores an operating system and may also store a computer program. When the computer program is executed by the processor, the processor implements an aggregated display method for map data. The internal memory may also store a computer program. When the computer program is executed by the processor, the processor implements the aggregated display method for map data. A person of ordinary skill can understand that the structure shown in FIG. 5 is only a block diagram of a part of a structure related to the solution of this application and does not constitute a limitation on the electronic device to which the solution of this application is applied. The electronic device may specifically include more or fewer components than shown in the figure, or combine certain components, or have different component arrangements.

In one embodiment, an electronic device is provided, including a memory and a processor. The memory stores a computer program, and when the computer program is executed by the processor, the processor performs the above steps.

With reference to FIG. 6. FIG. 6 is a schematic structural diagram of another embodiment of an aggregated display system for map data according to the present invention.

The aggregated display system for map data 20 includes the electronic device 21 and the network-attached storage device 22 described above. The electronic device 21 has an application installed that can perform the steps of the method described above.

It can be understood by a person of ordinary skill that all or a part of a process in the above method embodiment can be completed by instructing related hardware through a computer program. The program can be stored in a non-volatile computer-readable storage medium, and when executed, the program may include the processes of the above method embodiments. Any reference to a memory, storage, a database, or other media used in each embodiment provided in this application may include a non-volatile and/or volatile memory. The non-volatile memory may include a Read-Only Memory (ROM), a Programmable ROM (PROM), an Electrically Programmable ROM (EPROM), an Electrically Erasable Programmable ROM (EEPROM), or a flash memory. The volatile memory may include a Random Access Memory (RAM) or an external cache memory. By way of illustration and not limitation, RAM is available in various forms, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), Rambus Direct RAM (RDRAM), Direct Rambus DRAM (DRDRAM), Rambus DRAM (RDRAM), and the like.

The technical features of the above embodiments may be combined in any way. For the sake of brevity, not all possible combinations of the technical features in the above embodiments are described. However, as long as there is no contradiction in the combination of these technical features, the combinations should be considered within the scope described in this specification.

It should be understood that the above embodiments are only used to illustrate the technical solutions of the present invention, rather than limiting the technical solutions. For a person of ordinary skill, the technical solutions recorded in the above embodiments may be modified, or some of the technical features can be equivalently replaced. All such modifications and replacements shall fall within the scope of protection of the claims attached to the present invention.

## Claims

1. An aggregated display method for map data, applied to an electronic device on which a target application is installed, wherein the electronic device is communicatively connected to a network-attached storage device, the electronic device is capable of accessing target data in the network-attached storage device via the target application, and the target data comprises a target photo and geographic information corresponding to the target photo, wherein the method comprises:
acquiring a zoom level request for the target data, wherein the zoom level request comprises a current zoom level, and acquiring an area point density corresponding to the target data based on the geographic information;
acquiring a zoom adjustment factor through an exponential calculation based on the current zoom level, a maximum zoom level, and a minimum zoom level, acquiring a density adjustment factor through a logarithmic calculation based on the area point density, and multiplying a preset base radius by the zoom adjustment factor and the density adjustment factor to acquire a target aggregation radius; and
displaying the target photo based on the target aggregation radius.

2. The aggregated display method for map data according to claim 1, wherein the step of multiplying a preset base radius by the zoom adjustment factor and the density adjustment factor to acquire a target aggregation radius comprises:
acquiring the target aggregation radius according to the following formula: $R = {R}_{base} \times {\left(1+\frac{{zoom}_{current} - {zoom}_{min}}{{zoom}_{max} - {zoom}_{min}}\right)}^{2} \times {log}_{10} \left(density\right)$
wherein *R* is the target aggregation radius, *R_{base}* is the base radius, *zoom_{current}* is the current zoom level, *zoomₘᵢₙ* is the minimum zoom level, *zoomₘₐₓ* is the maximum zoom level, and *density* is the area point density.

3. The aggregated display method for map data according to claim 2, wherein the step of multiplying a preset base radius by the zoom adjustment factor and the density adjustment factor to acquire a target aggregation radius comprises:
acquiring an amount of the target data to be aggregated, and determining whether the amount of the target data to be aggregated exceeds a preset threshold; and
if the amount of the target data to be aggregated exceeds the preset threshold, performing the step of acquiring the target aggregation radius based on the zoom level and the area point density; or
if the amount of the target data to be aggregated does not exceed the preset threshold, using the base radius as the target aggregation radius.

4. The aggregated display method for map data according to claim 1, wherein the step of displaying the target photo based on the target aggregation radius comprises:
performing initial clustering on the target data based on the target aggregation radius to acquire an initial cluster point; and
acquiring a weight factor of each data point based on the initial cluster point, and performing, based on the weight factor, an iterative calculation to acquire a target centroid.

5. The aggregated display method for map data according to claim 4, wherein the step of acquiring a weight factor of each data point comprises:
selecting any one of the data points as a current data point, acquiring a distance between the current data point and a current centroid, and acquiring a weight factor of the current data point based on the distance.

6. The aggregated display method for map data according to claim 5, wherein the step of performing, based on the weight factor, an iterative calculation to acquire a target centroid comprises:
acquiring an iterative centroid of the current centroid according to the following formula: ${x}_{c} = \frac{\sum \left({w}_{i}{x}_{i}\right)}{\sum {w}_{i}}$ ${w}_{i} = \frac{1}{{{d}_{i}}^{2} + {10}^{- 5}}$
wherein *x_{c}* is the iterative centroid, *xᵢ* is a current coordinate of an i-th data point, *dᵢ* is a distance between the i-th data point and the current centroid, and *wᵢ* is a weight factor of the i-th data point.

7. The aggregated display method for map data according to claim 5, wherein the step of acquiring a weight factor of the current data point based on the distance comprises:
acquiring an attribute weight of the current data point based on an attribute of the current data point, acquiring a distribution weight of the current data point based on the distance, and acquiring the weight factor based on the attribute weight and the distribution weight.

8. The aggregated display method for map data according to claim 1, wherein before the step of displaying the target photo based on the target aggregation radius, the method further comprises:
acquiring operation information of a user on target map data, and acquiring an operation area and a non-operation area in the target map data;
acquiring an aggregation area based on the target aggregation radius; and
when the aggregation area is located in the operation area, reducing the target aggregation radius; or
when the aggregation area is located in the non-operation area, increasing the target aggregation radius.

9. The aggregated display method for map data according to claim 8, wherein the step of reducing the target aggregation radius comprises:
acquiring a reduction ratio according to the following formula: ${B}_{1} = max \left(0.3,1-\left(UIF\times TDF\right)\right)$
the step of increasing the target aggregation radius comprises:
acquiring an amplification ratio according to the following formula: ${B}_{2} = 1 + \left(2\times \left(1-TDF\right)\times \left(1-UIF\right)\right)$
wherein *B*₁ is the reduction ratio, *B*₂ is the amplification ratio, *UIF* is a user operation frequency, and *TDF* is time decay after the last operation.

10. The aggregated display method for map data according to claim 1, wherein the step of displaying the target photo based on the target aggregation radius comprises:
acquiring multiple aggregation points based on the target aggregation radius and the geographic information, each aggregation point corresponding to at least one target photo; and
counting a quantity of aggregated target photos corresponding to each aggregation point, acquiring a target display image based on the at least one target photo, and displaying the target display image and the quantity of aggregated target photos.

11. The aggregated display method for map data according to claim 10, wherein the step of acquiring a target display image based on the at least one target photo comprises:
selecting multiple target photos for merged display; or
selecting one of the target photos for display.

12. The aggregated display method for map data according to claim 1, wherein the step of acquiring a zoom level request for the target data comprises:
acquiring sliding information of a user on a screen of the electronic device in real time, and acquiring the zoom level request based on the sliding information.

13. An electronic device, comprising a memory and a processor, wherein the memory stores a computer program, and the computer program, when executed by the processor, causes the processor to perform the steps of the method according to any one of claims 1 to 12.

14. An aggregated display system for map data, comprising: a network-attached storage device and the electronic device according to claim 13, wherein an application capable of performing the steps of the method according to any one of claims 1 to 12 is installed on the electronic device.
